# FASCICULE DE BREVET EUROPEEN

(11) **EP 0 784 188 B1**
(45) Date de publication et mention de la délivrance du brevet: **08.05.2002**
(21) Numéro de dépôt: 97400047.3
(22) Date de dépôt: 10.01.1997
(51) Int. Cl.: F23C 11/00, B01J 23/89

(54) **Procédé de combustion catalytique à injection étagée de combustible**
Verfahren zur katalytischen Verbrennung mit gestufter Einspritzung von Kraftstoff
Catalytic combustion process with staged fuel injection

(30) Priorité: 15.01.1996 FR 9600513
(43) Date de publication de la demande: 16.07.1997
(73) Titulaire: INSTITUT FRANCAIS DU PETROLE, 92852 Rueil-Malmaison Cedex (FR)
(72) Inventeur: Euzen, Patrick, 92500 Rueil Malmaison (FR); Le Gal, Jean-Hervé, 75014 Paris (FR); Martin, Gérard, 92500 Rueil Malmaison France (FR)

(56) Documents cités:
- EP-A- 0 125 565
- EP-A- 0 259 758
- WO-A-94/20789
- FR-A- 2 721 837
- US-A- 4 857 499
- PATENT ABSTRACTS OF JAPAN vol. 010, no. 055 (M-458), 5 Mars 1986 & JP 60 202206 A (TOSHIBA KK), 12 Octobre 1985,
- PATENT ABSTRACTS OF JAPAN vol. 011, no. 021 (M-555), 21 Janvier 1987 & JP 61 195215 A (MITSUBISHI HEAVY IND LTD), 29 Août 1986,
- PATENT ABSTRACTS OF JAPAN vol. 010, no. 185 (C-357), 27 Juin 1986 & JP 61 033233 A (NIPPON SHOKUBAI KAGAKU KOGYO CO LTD), 17 Février 1986,
- REVUE GENERALE DE THERMIQUE, vol. 28, no. 330/331, Juin 1989, pages 401-406, XP000036693 JONES D ET AL: "COMBUSTION CATALYTIQUE ET GAZ NATUREL"

## Description

La présente invention concerne un procédé de combustion catalytique avec injection étagée utilisant un catalyseur d'oxydation non-sélective.

La combustion conventionnelle, réalisée en présence d'une flamme, habituellement utilisée dans les procédés de combustion d'hydrocarbures, tels que le gaz naturel, est un processus difficilement contrôlable. Elle se produit dans un domaine de concentrations air/hydrocarbure bien déterminé et conduit, outre à la formation de dioxyde de carbone et d'eau, à la production de polluants tels que le monoxyde de carbone et les oxydes d'azote.

En raison de la sévérisation accélérée des contraintes environnementales sur les polluants (oxydes d'azote, hydrocarbures imbrûlés, monoxyde de carbone) émis par les procédés de combustion, il devient nécessaire de trouver de nouvelles technologies permettant de diminuer fortement les émissions de ceux-ci. Plusieurs solutions conventionnelles sont bien connues de l'homme de l'art :
- La réduction sélective des gaz d'échappement (en abrégé S.C.R. pour "Selective Catalytic Reduction"). La réduction sélective des oxydes d'azote par l'ammoniac permet de réduire les teneurs en NOₓ à environ 10 ppm. Mais cette solution nécessite la mise en place d'un réacteur particulier, le stockage et l'utilisation d'ammoniac ; les frais d'installation et de fonctionnement d'un S.C.R. sont donc élevés.
- L'injection d'eau ou de vapeur d'eau. Une telle injection abaisse la température atteinte par les gaz de combustion réduisant ainsi de façon significative les teneurs en NOₓ à environ 50 ppm. Le coût de l'addition d'un tel dispositif est faible. Mais, les coûts de fonctionnement d'une telle installation sont élevées en raison de la purification de l'eau préalable à l'injection et de la surconsommation de combustible due à un abaissement du rendement énergétique. En outre, si l'injection d'eau suffit pour passer les normes actuelles, elle ne permettra pas de satisfaire aux normes futures sur les NOₓ.
- Une zone primaire à mélange pauvre. Cette technologie repose sur l'amélioration de l'homogénéité du mélange air/combustible. Elle permet de faire chuter les émissions de NOₓ à environ 50 ppm, mais cette diminution se fait au détriment des émissions de monoxyde de carbone et d'hydrocarbures imbrûlés, qui se trouvent accrues.

La combustion catalytique est une solution séduisante pour répondre à la sévérisation croissante des normes sur les polluants. En effet, la chambre de combustion catalytique remplace avantageusement les brûleurs conventionnels, car elle autorise un meilleur contrôle de l'oxydation totale dans un large domaine des valeurs du rapport air/hydrocarbure, réduisant ainsi fortement les émissions des d'oxydes d'azote, d'hydrocarbures imbrûlés et de monoxyde de carbone. On peut également mentionner qu'elle permet de brûler une très grande variété de composés.

Ainsi que le décrivent notamment D.Reay dans "Catalytic Combustion : Current Status and Implications for Energy Efficiency in the Process Industries. Heat Recovery Systems & CHP, 13. n°5, pp 383-390, 1993" et D. Jones et S.Salfati dans "Rev. Gén. Therm. Fr. n°330-331, pp 401-406, Juin-Juillet 1989", les applications de la combustion catalytique sont multiples : panneaux et tubes radiants, réchauds catalytiques, turbines à gaz, cogénération, brûleurs, manchons catalytiques pour tubes de vapo-reformage, production de gaz chauds dans le domaine du chauffage par contact direct et réacteurs à plaques catalytiques.

Concernant les procédés de combustion catalytique dans les domaines de la production d'énergie et de la cogénération, la configuration de réacteur la plus répandue est un réacteur comportant plusieurs zones catalytiques: le(s) catalyseur(s) d'entrée étant plus spécifiquement dédié à l'amorçage de la réaction de combustion, les suivants servant à stabiliser la réaction de combustion à haute température ; le nombre d'étages (ou de zones) catalytiques étant ajusté en fonction des conditions imposées par l'application envisagée.

Les catalyseurs de combustion sont généralement préparés à partir d'un substrat monolithique, en céramique ou en métal, sur lequel on dépose une fine couche de support constituée d'un ou plusieurs oxydes réfractaires de surface et de porosité supérieures à celles du substrat monolithique. Sur cet oxyde est dispersée la phase active composée essentiellement des métaux du groupe du platine.

Ainsi qu'il est connu de l'homme de l'art, les métaux du groupe du platine présentent la plus haute activité catalytique pour l'oxydation des hydrocarbures et amorcent donc la combustion à plus basse température que les oxydes des métaux de transition. Ils sont donc utilisés de façon préférée dans les premières zones catalytiques. Toutefois, en raison des températures élevées atteintes soit lors des phases de démarrage, soit en régime établi, ces catalyseurs subissent une dégradation qui fait chuter leurs performances catalytiques. Le frittage du support à base d'alumine ainsi que le frittage de la phase métallique active et/ou son encapsulation par le support font partie des causes les plus couramment citées pour expliquer cette dégradation.

Il est connu que l'on peut stabiliser efficacement la chute de surface spécifique des supports à base d'alumine par un dopant approprié. Les terres rares et la silice sont souvent cités parmi les stabilisants les plus performants de l'alumine. Des catalyseurs préparés par cette technique sont décrits entre autres dans le brevet US-A- 4 220 559. Dans ce document, le catalyseur comprend des métaux du groupe du platine ou des métaux de transition déposés sur de l'alumine, un oxyde d'un métal choisi dans le groupe constitué par le baryum, le lanthane et le strontium et un oxyde d'un métal choisi dans le groupe constitué par l'étain, le silicium, le zirconium et le molybdène.

En outre, afin de limiter le frittage de la phase métallique active, il a été proposé d'ajouter divers stabilisants à base essentiellement d'oxydes de métaux de transition.

Ainsi, dans le brevet américain US-A- 4 857 499, le catalyseur comprend un support poreux dont le diamètre des pores est compris entre 150 et 300 Å et dont la proportion en poids rapporté au substrat est de façon préférentielle comprise entre 50 et 200 g/l, une phase active incluant au moins 10% en poids, rapporté au support poreux, d'un métal précieux choisi dans le groupe formé par le palladium et le platine; un premier promoteur incluant au moins un élément choisi dans le groupe constitué par le lanthane, le cérium, le praséodyme, le néodyme, le baryum, le strontium, le calcium et leurs oxydes, dont la proportion en poids rapporté au support poreux est comprise entre 5 et 20%; un deuxième promoteur incluant au moins un élément choisi dans le groupe formé par le magnésium, le silicium et leurs oxydes, dont la proportion en poids rapportée à la phase active est inférieure ou égale à 10%; et un troisième promoteur incluant au moins un élément choisi dans le groupe constitué par le nickel, le zirconium, le cobalt, le fer et le manganèse et leurs oxydes, dont la proportion en poids rapportée à la phase active est inférieure ou égale à 10%. En outre, ledit catalyseur peut être déposé sur un substrat monolithique appartenant au groupe formé par la cordierite, la mullite, l'alumine alpha, la zircone et l'oxyde de titane ; la proportion en poids de support poreux rapportée au volume de substrat étant comprise entre 50 et 200 g/l.

Dans le brevet américain US - A - 4 793 797, le catalyseur comprend un support inorganique choisi dans le groupe constitué par les oxydes, les carbures et les nitrures d'éléments appartenant aux groupes IIa, IIIa et IV de la classification périodique des éléments, ou choisi dans le groupe constitué par La-β-Al₂O₃, Nd-β-Al₂O₃, Ce-β-Al₂O₃ ou Pr-β-Al₂O₃, au moins un métal précieux choisi dans le groupe constitué par le palladium, le platine, le rhodium et le ruthénium, et au moins un oxyde d'un métal de base sélectionné dans le groupe constitué par le magnésium, le manganèse, le cobalt, le nickel, le strontium, le niobium, le zinc, l'étain, le chrome et le zirconium, tel que le rapport atomique du métal de base sur le métal précieux soit compris entre 0,1 et 10.

Par ailleurs, s'agissant des formulations pouvant travailler à haute température, les oxydes mixtes sont généralement plus résistants que les métaux précieux. Parmi les oxydes, les pérovskites et plus particulièrement LaMnO₃, LaCoO₃ et La₁₋ₓSrₓMnO₃, où 0 ≤ x ≤ 0,2 , sont intéressants pour l'oxydation catalytique des hydrocarbures, mais leur surface chute rapidement lorsque la température dépasse 800°C. H.Arai et al. ont proposé des formulations à base d'hexaaluminates contenant du manganèse, présentant un bon compromis activité catalytique/stabilité thermique, ainsi que décrit notamment dans le brevet américain US-A- 4 788 174. Le catalyseur de combustion catalytique proposé peut être représenté par la formule : A_{1-z}C_{z}BₓAl_{12-y}O_{19-α}, dans laquelle
A est au moins un élément choisi dans le groupe formé par Ba, Ca et Sr avec (0 ≤ z ≤ 0,4);
B est au moins un élément choisi dans le groupe formé par Mn, Fe, Co, Ni, Cu et Cr avec (x ≤ y ≤ 2x);
C est K et/ou Rb; et
α = 1-1/2 {X-z (X-Y) + xZ -3Y} où X, Y, Z représentent respectivement les valences des éléments A, C et B.

H.Arai et al. ont également proposé d'ajouter un métal précieux à de tels catalyseurs, ainsi que décrit, notamment, dans le brevet américain US-A- 4 959 339. Le catalyseur ainsi proposé est représenté par la formule:
A_{1-z}C_{z}BₓDᵤAl_{12-y-u}O_{19-α} dans laquelle
A est au moins un élément choisi dans le groupe formé par Ba, Ca et Sr avec (0 ≤ z ≤0,4);
B est au moins un élément choisi dans le groupe formé par Mn, Fe, Co, Ni, Cu et Cr avec (x ≤ y ≤ 2x);
C est au moins un élément choisi dans le groupe formé par K, Rb et les terres rares;
D est au moins un élément choisi dans le groupe formé par Au, Ag, Pd, Pt et autre métal précieux du groupe du platine avec x+u ≤ 4; et
α = 1 - 1/2 {X-z (X-Y) + xZ + uU-3y- 3u} où X, Y, Z et U représentent respectivement les valences des éléments A, C, B et D.

Parmi les brevets particulièrement représentatifs des réacteurs de combustion à plusieurs zones catalytiques, on peut citer notamment :
- la demande de brevet européen EP-A-198 948, qui utilise
   en 1^{ère} zone catalytique : Pd et Pt et NiO; et
   en 2^{ème} zone catalytique : Pt et Pd ;
- la demande de brevet japonais JP-A-04/197 443, qui utilise
   en 1^{ère} zone catalytique : Pd et/ou Pt ;
   en 2^{ème} zone catalytique : Sr_{0.8}La_{0.2}MnAl₁₁O_{19-α},
   en 3^{ème} zone catalytique : Sr_{0.8}La_{0.2}MnAl₁₁O_{19-α};
- les demandes de brevets internationales WO-A-92/9848 et WO-A-92/9849, qui utilisent
   en 1^{ère} zone catalytique : Pd et (Pt ou Ag) ;
   en 2^{ème} zone catalytique : Pd et (Pt ou Ag); et
   en 3^{ème} zone catalytique : pérovskite ABO₃ ou oxyde de métal du groupe
   V(Nb ouV), du groupe VI (Cr) ou du groupe VIII (Fe, Co, Ni).

Le point critique du procédé multi-étages réside dans le contrôle de la température au sein des différents étages catalytiques. Si la réaction de combustion s'emballe, la température du catalyseur peut atteindre rapidement la température adiabatique de flamme. Or, il est important de couvrir l'intégralité de la plage de charge de la turbine à gaz. Depuis le processus d'inflammation jusqu'à la pleine charge en passant par le ralenti, le rapport air-combustible peut varier dans des proportions importantes. L'utilisation d'une telle chambre de combustion catalytique peut donc s'avérer délicate.

On connait par ailleurs le brevet américain US- A - 4 731 989 de Furuya et al., qui décrit un procédé de combustion comportant comme caractéristique majeure une injection étagée de combustible. Ce procédé dit "hybride" est composé d'une zone catalytique où est brûlée une fraction de combustible, cette zone catalytique étant suivie d'une zone de post-combustion en phase homogène, où le reste du combustible est mélangé aux gaz chauds sortant du catalyseur en aval de celui-ci et est brûlé sous forme de flamme de prémélange. Le rapport air/combustible du mélange entrant dans la zone catalytique est ajusté de façon à ce que la température adiabatique des gaz ne dépasse pas environ 1000°C en sortie de cette zone catalytique. Le reste du mélange est injecté en aval de la zone catalytique afin d'atteindre une température de gaz de combustion compatible avec les exigences des procédés de combustion actuels soit 1200°C à 1500°C. En raison de la limitation des températures de matériaux à 1000°C, le catalyseur ne subit pas de désactivation.

Ce procédé est intéressant dans la mesure où il offre une sécurité supérieure à celle d'un procédé où le contrôle de la température s'opère par la seule configuration du monolithe ou de l'ensemble des monolithes. Dans les phases de démarrage, il est également plus souple à mettre en oeuvre.

Toutefois, plus récemment, dans un article de Furuya et al., "A Study on Combustion Catalyst for Gaz Turbine", Second Tokyo Conference on Advanced Catalytic Science and Technology (TOCAT), Tokyo, 21-26 août 1994, I.38, page 129-130, les auteurs indiquent que l'activité catalytique d'un catalyseur à base de palladium oscille entre 800°C et 1000°C en raison de l'équilibre PdO ⇔ Pd + 1/2 O₂. Ce comportement instable du palladium est observé en cours de fonctionnement dans un tel réacteur de combustion à injection étagée ; Furuya et al. ajoutent que si ce problème d'instabilité des formulations à base de palladium peut être résolu, un catalyseur à base de palladium sera particulièrement adapté pour ce procédé à injection étagée.

Une approche globale du procédé de combustion catalytique prenant en compte à la fois les avantages et les inconvénients de la configuration du réacteur catalytique et la formulation catalytique devient donc impérative. Et, malgré les nombreux travaux de perfectionnement déjà réalisés, il reste intéressant de rechercher une combinaison entre la configuration du réacteur catalytique et la formulation catalytique qui réponde aux exigences d'un procédé de combustion de plus en plus draconiennes.

On connaît par ailleurs, selon la demande de brevet français FR-A-2726774 au nom du même déposant, des catalyseurs de combustion comportant du fer et du cérium associés au palladium et/ou au platine, déposés sur un oxyde inorganique réfractaire. Une autre demande de brevet français, également déposée par la demanderesse, le 22 Décembre 1995, sous le numéro E.N.95/15341, décrit des catalyseurs de combustion comportant du cérium, du fer ainsi que du zirconium associés au palladium et/ou au platine, déposés sur un oxyde inorganique réfractaire.

Les travaux de recherche menées par la demanderesse l'ont conduite à découvrir, de façon surprenante, qu'un procédé de combustion catalytique avec injection étagée dont la zone catalytique comprend un catalyseur contenant à la fois du fer, du cérium, éventuellement du zirconium et des métaux précieux du groupe du platine, tout en remédiant aux inconvénients de l'art antérieur, s'avère présenter une stabilité remarquable non seulement en cours de fonctionnement mais aussi au cours de démarrages successifs.

La présente invention propose donc un procédé de combustion catalytique à injection étagée de combustible comprenant : une première injection de combustible et d'air et le passage du mélange air-combustible formé dans une zone catalytique; et une seconde injection de combustible dans le flux de sortie de ladite zone catalytique; ledit procédé étant caractérisé en ce que ladite zone catalytique comprend au moins un catalyseur comprenant un substrat monolithique, un support poreux à base d'oxyde inorganique réfractaire et une phase active comprenant du cérium, du fer, et éventuellement du zirconium, ainsi qu'au moins un métal choisi dans le groupe formé par le palladium et le platine; la teneur en support poreux est comprise entre 100 et 400 g par litre de catalyseur, la teneur en cérium est comprise entre 0,3 et 20% en poids par rapport au support poreux; la teneur en zirconium est comprise entre 0 et 20% en poids par rapport au support poreux; la teneur en fer étant comprise entre 0,01 et 3,5% de fer en poids par rapport au support poreux; et la teneur en palladium et/ou platine est supérieure à 3 g par litre de catalyseur.

Selon des caractéristiques encore plus préférentielles dudit catalyseur de la zone catalytique du procédé de la présente invention, la teneur en support poreux est comprise entre 200 et 350 g par litre de catalyseur ; la teneur en cérium est comprise entre 2 et 15% en poids par rapport au support poreux; la teneur en fer est comprise entre 0,1 et 2% en poids par rapport au support poreux; la teneur en zirconium est comprise entre 2 et 15% en poids par rapport au support poreux; et la teneur en palladium et/ou platine est comprise entre 5 et 15 g par litre de catalyseur.

En outre, le débit de combustible injecté dans l'air en amont de la zone catalytique est généralement tel que la température du catalyseur de ladite zone soit inférieure à environ 1000°C, et que la température des gaz en sortie de ladite zone catalytique soit inférieure à environ 1000°C.

La température maximale atteinte par les gaz en sortie de la zone catalytique (Tₘₐₓₛₒᵣₜᵢₑ) est égale à la somme de la température d'entrée des gaz dans la zone catalytqiue (T_{entrée}) et la température générée par la combustion du combustible (ΔT_{adiabatique}). Ainsi, lorsque la température d'entrée du mélange air-combustible dans la zone catalytique est de l'ordre de 500°C, on injecte environ deux tiers du débit de combustible nécessaire en mélange avec l'air en amont de la zone catalytique et le tiers restant lors de la seconde injection dans le flux de sortie de la zone catalytique.

Comme indiquée plus haut, la teneur en support poreux du catalyseur de zone catalytique du procédé à injection étagée de la présente invention, varie entre 100 et 400 g par litre de catalyseur mais de façon encore plus préférée entre 200 et 350 g/l. Si la teneur en support poreux est inférieure à 100 g, l'activité catalytique n'est pas suffisante. Inversement, une teneur en support poreux supérieure à 400 g/l est également néfaste pour l'activité catalytique car elle se traduit par un bouchage des canaux du monolithe.

Dans les catalyseurs utilisés dans le procédé selon l'invention, le substrat monolithique peut consister en un monolithe à structure cellulaire, en céramique ou métallique (enroulement, empilement de feuillards métalliques ou encore association de fibres métalliques ou de fils métalliques sous la forme d'un monolithe à structure fibreuse). La céramique employée peut être de la mullite, de la cordierite, de l'alumine a, de la zircone, du titanate d'alumine, du carbure de silicium, du nitrure de silicium ou leurs mélanges. Ces substrats monolithiques sont produits par extrusion. Les alliages métalliques employés doivent présenter de préférence des propriétés réfractaires. Ils peuvent par exemple être composés de fer, chrome, d'aluminium et de cérium ou d'yttrium, tels que l'acier Gilphal 135® de la société IMPHY. Le substrat métallique peut être préalablement soumis à un traitement oxydant à une température comprise entre 700°C et 1200°C, de préférence entre 800 et 1000°C. La densité de cellules, c'est-à-dire le nombre de cellules par section de monolithe, est généralement comprise entre 50 et 600 cellules par pouce-carré (7,75 à 93 cellules par cm²).

La préparation et la mise en forme du support peuvent constituer la première étape de la préparation de ces catalyseurs. Le support à base d'oxyde réfractaire mis en oeuvre selon l'invention est généralement choisi dans le groupe formé par les oxydes réfractaires des métaux des Groupes IIa, IIIa, IVa et IVb de la classification périodique des éléments et leurs mélanges en toutes proportions.

Le plus souvent, les oxydes d'aluminium de formule générale Al₂O₃, nH₂O sont utilisés. Leur surface spécifique est comprise entre 10 et 500 m²/g. Les oxydes dans lequels n est compris entre 0 et 0,6, sont classiquement obtenus par déshydratation contrôlée d'hydroxydes dans lesquels 1≤ n ≤3. Ces hydroxydes sont eux-mêmes préparés par précipitation en milieu aqueux de sels d'aluminium par des bases ou des acides. Les conditions de précipitation et de mûrissement déterminent plusieurs formes d'hydroxydes dont les plus communs sont la boehmite (n=1), la gibbsite et la bayerite (n=3). En fonction des conditions hydrothermiques de traitement, ces hydroxydes donnent plusieurs oxydes ou alumines de transition. On dénombre ainsi les formes alpha, delta, êta, gamma, kappa, khi, rhô et thêta. Celles-ci se différencient essentiellement par l'organisation de leur structure cristalline. Lors de traitements thermiques, ces différentes formes sont susceptibles d'évoluer entre elles, selon une filiation complexe, qui dépend des conditions opératoires de traitement. La forme alpha qui présente une surface spécifique très faible est stable à plus haute température. On préfère utiliser des alumines présentant une surface spécifique comprise entre 20 et 250 m²/g et en particulier l'alumine gamma et/ou delta.

Afin d'augmenter la stabilité thermique de ce ou ces oxydes, divers composés peuvent être incorporés au support poreux, soit directement sous la forme de pigments, soit sous la forme de composés précurseurs d'oxydes. Les oxydes des terres rares, les oxydes des métaux alcalino-terreux et la silice, qui sont parmi les stabilisants les plus performants de l'alumine, peuvent être avantageusement incorporés au support poreux. On utilise de préférence la silice, par exemple à une teneur de 1 à 5% en poids par rapport au support poreux.

La teneur en métal du groupe constitué par le platine et le palladium du catalyseur utilisé dans l'invention est de préférence supérieure à 3 g par litre de catalyseur et manière encore plus préférée comprise entre 5 et 15 g par litre de catalyseur. Si la teneur en métal précieux est inférieure à 3 g, l'activité catalytique n'est pas suffisamment élevée pour satisfaire aux exigences d'un procédé de combustion. A l'opposé, lorsque la teneur en métal précieux dépasse 20 g, une augmentation ultérieure de la teneur en métal précieux ne permet pas d'accroître de façon significative l'activité catalytique. Selon l'invention, le palladium est préféré. Toutefois, le platine peut être avantageusement utilisé pour un étage de combustion fonctionnant à des températures relativement basses, par exemple à environ 500°C, ou en combinaison avec le palladium.

La présence de fer et de cérium déposés simultanément sur le ou les oxydes inorganiques réfractaires permet d'améliorer l'activité et la stabilité du catalyseur du procédé de la présente invention au cours du temps. Le zirconium peut encore renforcer cette effet de synergie.

La teneur en cérium du catalyseur de la zone catalytique du procédé selon l'invention est comprise de préférence entre 0,3 et 20% en poids par rapport au support, et de façon encore plus préférentielle entre 2 et 15% en poids par rapport au support poreux. Si la teneur en cérium est inférieure à 0,3%, celui-ci ne promeut pas de façon satisfaisante l'activité catalytique. Inversement, lorsque la teneur en cérium dépasse 20% en poids par rapport au support poreux, une augmentation ultérieure de la teneur en cérium ne permet pas d'accroître de façon significative l'activité catalytique.

La teneur en fer du catalyseur de la zone catalytique du procédé de la présente invention est comprise entre 0,01 et 3,5% en poids par rapport au support et plus particulièrement entre 0,1 et 2%. Si la teneur en fer dépasse 3,5%, le fer alors peut accélérer fortement la chute de surface spécifique du support poreux à base d'alumine.

La teneur en zirconium du catalyseur de la zone catalytique du procédé selon l'invention est de préférence comprise entre 0 et 20% en poids de support poreux, et de façon encore plus préférentielle entre 2 et 15% en poids par rapport au support poreux. Lorsque la teneur en zirconium atteint 20% en poids par rapport au support poreux, une augmentation ultérieure de la teneur en zirconium ne permet pas d'accroître de façon significative l'activité catalytique.

La préparation du catalyseur de la zone catalytique du procédé selon l'invention déposé sur un substrat consiste en une étape d'enduction, au cours de laquelle le substrat est plongé dans une suspension contenant les précurseurs des composants du catalyseur, puis est séché et calciné après évacuation de l'excès de ladite suspension. Une deuxième étape dite d'imprégnation permet de déposer les métaux actifs. Pour cela, on met en contact le substrat enduit avec une ou plusieurs solutions du ou des précurseurs des métaux actifs. Après avoir été éventuellement égoutté, le substrat ainsi enduit et imprégné est séché et subit un traitement thermique.

Le dépôt de cérium, de fer et éventuellement de zirconium sur le support du catalyseur utilisé dans la présente invention est réalisable selon toutes les techniques connues de l'homme de l'art et peut intervenir à tout moment lors de la préparation du catalyseur. Ces éléments peuvent être introduits sous forme de composés solides (oxydes, hydroxydes, carbonates, hydroxycarbonates ou encore sels insolubles) ou de composés solubles (nitrates, sulfates, chlorures, alcoolates) dans la suspension d'enduction, et/ou pré-imprégnés sur l'un des constituants de la suspension d'enduction, et/ou déposés sur le support poreux avant l'imprégnation des métaux nobles, et/ou coimprégnés avec ces métaux selon la technique envisagée. Dans le cas où le cérium, le fer et éventuellement le zirconium sont déposés après la mise en forme des alumines contenant éventuellement d'autres métaux, les méthodes employées peuvent être par exemple l'imprégnation à sec, l'imprégnation par excès de solution ou l'échange ionique. Sur un support déjà mis en forme, une méthode préférée d'introduction du métal noble est l'imprégnation en milieu aqueux en utilisant un excès de solution. Afin d'éliminer le solvant d'imprégnation, cette imprégnation est suivie d'un séchage et d'une calcination sous air à une température comprise entre 300 et 900°C .

Selon un mode de mise en oeuvre particulier, on imprègne successivement le support avec une solution contenant des composés contenant du cérium, du fer et éventuellement du zirconium, puis avec une ou des solutions contenant des composés des métaux précieux que l'on souhaite introduire.

Comme composés du cérium, du fer et du zirconium que l'on peut mettre en oeuvre, on citera notamment les sels de cérium, de fer et de zirconium, et plus particulièrement le nitrate céreux, l'acétate céreux, le chlorure céreux et le nitrate cérique ammoniacal, le nitrate ferrique, le citrate de fer ammoniacal et le chlorure ferrique, et le nitrate de zirconyle et le tétrachlorure de zirconium.

Les précurseurs des métaux du groupe formé par le platine et le palladium sont ceux classiquement utilisés pour la préparation des catalyseurs, en particulier les chlorures, les complexes chlorés, les nitrates, les complexes amminés, les acétylacétonates. A titre d'exemple, on peut citer l'acide chloroplatinique, le chlorure de palladium, le chlorure de platine tétrammine, le dinitrodiamminoplatine et le nitrate de palladium.

La profondeur d'imprégnation peut être avantageusement réglée par l'utilisation de méthodes connues de l'homme de l'art et en particulier par ajout dans la solution des métaux précieux d'une certaine quantité d'acide minéral ou organique. On utilise couramment les acides nitrique, chlorhydrique et fluorhydrique ou les acides acétique, citrique et oxalique.

Dans le procédé de l'invention, il doit être entendu que la zone catalytqiue peut être constituée de plusieurs monolithes successifs.

Le procédé de combustion catalytique à injection étagée dont la zone catalytique comprend un catalyseur tel que décrit ci-dessus apporte des performances améliorées spécialement dans les procédés de combustion catalytique d'hydrocarbures tels que du méthane, de monoxyde de carbone, d'hydrogène ou de leurs mélanges. Mais ils sont également utilisables dans tous les procédés catalytiques nécessitant des températures élevées.

En outre, un élément monolithique peut être disposé en aval de la zone d'injection afin de stabiliser la combustion. Comme décrit ci-dessus, cet élément monolithique peut consister en un monolithe à structure cellulaire, en céramique ou métallique (enroulement, empilement de feuillards métalliques ou encore association de fibres métalliques ou de fils métalliques sous la forme d'un monolithe à structure fibreuse).

Par aillleurs, cet élément monolithique additionnel peut être recouvert d'un catalyseur, préférentiellement choisi parmi les hexaaluminates.

Avantageusement, ledit catalyseur correspond essentiellement à la formule dans la demande de brevet français FR-A-2 721 837 au nom du même déposant, soit A₁₋ₓB_{y}C_{z}Al_{12-y-z}O_{19-δ}, dans laquelle A représente au moins un élément de valence X sélectionné dans le groupe formé par le baryum, le strontium et les terres rares; B représente au moins un élément de valence Y sélectionné dans le groupe formé par Mn, Co et Fe; C représente au moins un élément sélectionné dans le groupe formé par Mg et Zn; x ayant une valeur de 0 à 0,25, y ayant une valeur de 0,5 à 3 et z ayant une valeur de 0,01 à 3; la somme y + z ayant une valeur maximale de 4 et δ a une valeur qui, déterminée en fonction des valences X et Y respectives des éléments A et B et des valeurs de x, y et z, est égale à 1-1/2 {(1-x)X + yY-3 y - z}.

La figure 1 représente l'évolution de la conversion en méthane en fonction du temps écoulé suivant la teneur en méthane pour le procédé selon l'exemple 1.

La figure 2 représente des courbes de température en différents points de la zone catalytique dans la mise en oeuvre des exemples 3 et 4. Ladite zone catalytique comprend trois tranches de monolithe I, II et III. Les distances L (en mètres) sont rapportés à la face d'entrée de la première tranche de monolithe.

La figure 3 représente l'évolution de la conversion en méthane en fonction du temps écoulé en fonction de la teneur en méthane pour le procédé selon l'exemple 4.

Les exemples suivants illustrent l'invention sans toutefois la limiter ; les exemples 1 à 4 sont donnés à titre de comparaison.

### EXEMPLE 1 : (comparatif)

La zone catalytique est composée de trois tranches de monolithe en cordiérite, dont la densité de cellules est égale à 350 cellules/pouce carré soit environ 54,25 cellules/cm², juxtaposés les unes aux autres à l'intérieur d'une enveloppe. Les parois des canaux des tranches de monolithe ont une épaisseur de 0,14 mm. Chaque tranche de monolithe a une longueur de 5 cm et un diamètre de 20 cm. Chacune des tranches est enduite à 120 g/l par une formulation sur alumine stabilisée selon le mode de préparation décrit dans l'exemple 14 de la demande de brevet français FR-A-2 726 774 au nom du même déposant. Chacune des tranches de monolithe est ensuite imprégnée par du nitrate de palladium de façon à déposer en poids 3% de palladium par rapport au support poreux.

Les performances des procédés sont comparées pour la réaction de combustion du méthane, principal constituant du gaz naturel.

L'air qui arrive sur la premiere tranche de monolithe est préchauffé à 380°C à la pression de 15 bars. Le combustible injecté en amont de la premiere tranche monolithe est du méthane de telle manière que la VVH, qui est définie comme le rapport du débit volumique de gaz sur le volume de catalyseur, soit égale à 500 000 h⁻¹. La teneur en gaz naturel varie de 2% à 3,5%. La concentration en méthane à l'entrée et à la sortie du réacteur est déterminée à l'aide d'un détecteur à ionisation de flamme (analyseur JUM ENGINEERING, modèle FID 3-300). La conversion du méthane est le rapport en pourcentage entre la différence de concentration en méthane entre l'entrée et la sortie et la concentration en entrée. Après une montée en température sous mélange réactionnel, on fixe la température d'entrée du mélange réactionnel à 500°C, on mesure la conversion du méthane en régime stabilisé. La durée est ajustée de façon à discriminer de façon significative les configurations de procédé en fonction de leur aptitude à stabiliser la combustion du méthane.

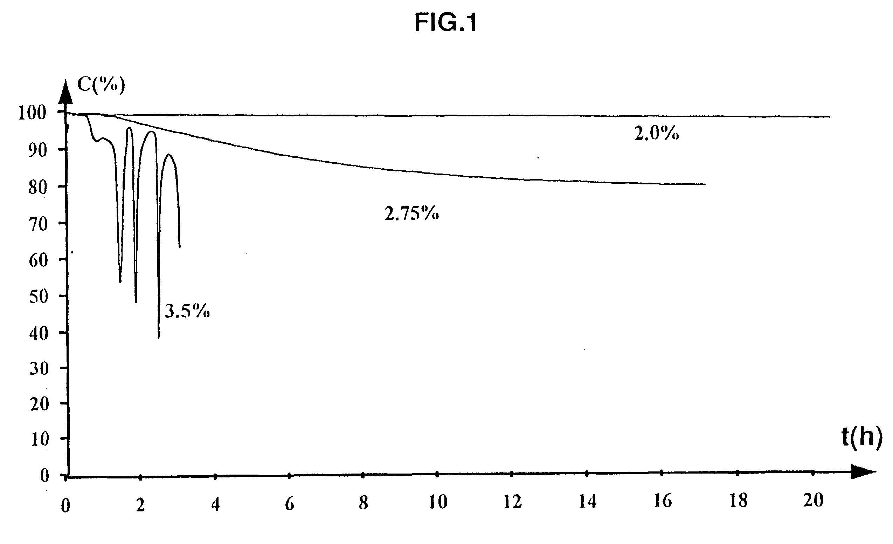

Sur la figure 1 est représentée l'évolution de la conversion du méthane pour ce catalyseur pour trois teneurs différentes en méthane : 2%, 2,75% et 3,5%. Elle montre que la désactivation du catalyseur est d'autant plus rapide que la teneur en méthane est élevée : à 2%, la conversion reste supérieure à 98% au bout de de 20 heures ; à 2,75%, elle n'est plus que de 80% après 16h ; enfin à 3,5%, la conversion chute rapidement au bout d'une heure environ puis se met à osciller entre 40 et 95% de conversion. Le palladium se désactive d'autant plus rapidement (figure 1) que la teneur en méthane est forte car une augmentation de celle-ci, de 2 à 3,5% dans l'air, induit une température de fonctionnement plus élevée. A 3,5% de méthane, le profil de température à l'intérieur du catalyseur est beaucoup plus abrupt qu'à 2% et 2,75% et le catalyseur subit des températures supérieures à 1000°C. Or, dès que la température du catalyseur dépasse 900°C, l'oxyde de palladium se transforme en palladium métallique et la conversion chute. Par contre, à 2% de méthane, la température du catalyseur n'atteint pas 900°C dans de la premiere tranche de centimètre du monolithe. Cette tranche d'entrée du monolithe fonctionne donc dans une zone de température où ne se produit pas la décomposition PdO ⇔Pd + 1/2 O₂. La désactivation est par conséquent fortement ralentie puisque seul le frittage du palladium peut en être responsable. Un tel comportement - désactivation avec oscillation de l'activité catalytique - est propre au couple palladium/méthane car il n'est pas observé pour le même catalyseur dans le cas du propane à teneur équivalente en ppmC. Cet exemple souligne la spécificité du couple palladium/méthane et met en évidence la nécessité d'avoir un procédé de combustion "bridé", afin que le premier étage catalytique à base de palladium supporté ne subisse pas de température excessive.

### EXEMPLE 2 (comparatif) :

Afin de montrer l'effet combiné du fer et du cérium sur l'activité catalytique, on enduit trois tranches de monolithe comme décrit ci-dessus par une enduction telle que décrite dans l'exemple 1 de la demande de brevet français FR-A-2 726 774.

On imprègne ensuite le monolithe par une solution de palladium de façon à déposer en poids 3% de palladium par rapport au support poreux enduit, soit encore exprimé par rapport au catalyseur : 3,6 g de palladium par litre de catalyseur.

Le catalyseur ainsi préparé contient en poids rapporté au support poreux 4.13% de cérium, 1,31% de fer et 3% de palladium.

Les conditions opératoires sont telles que décrites dans l'exemple 1. La teneur en méthane est fixée à 3,5%. Le catalyseur présente une activité élevée même après cinquante heures de fonctionnement : la conversion demeure supérieure à 95%. Toutefois, la température d'amorçage au cours de tests successifs augmente sensiblement, passant de 300 à 350°C.

### EXEMPLE 3 (comparatif) :

La zone catalytique est composée de trois tranches de monolithe identiques à celles de l'exemple 1 et chacune de ces tranches de monolithe est enduite puis imprégnée comme décrit dans l'exemple 1.

Les performances du procédé sont alors évaluées pour la réaction de combustion du gaz naturel. L'air qui arrive sur la première tranche de monolithe est préchauffé à 380°C à la pression de 15 bars. Le combustible injecté en amont de cette première tranche de monolithe est du gaz naturel (exemple de composition : 98% CH₄, 2% de C₂H₆) de telle manière que la VVH, qui est définie comme le rapport du débit volumique de gaz sur le volume de catalyseur, soit égale à 500 000 h⁻¹. La teneur en gaz naturel est fixée à une richesse de 0,3. Le débit d'air entrant dans le système est égal à 2957 kg/h. Le débit de gaz naturel est égal à 87 kg/h.

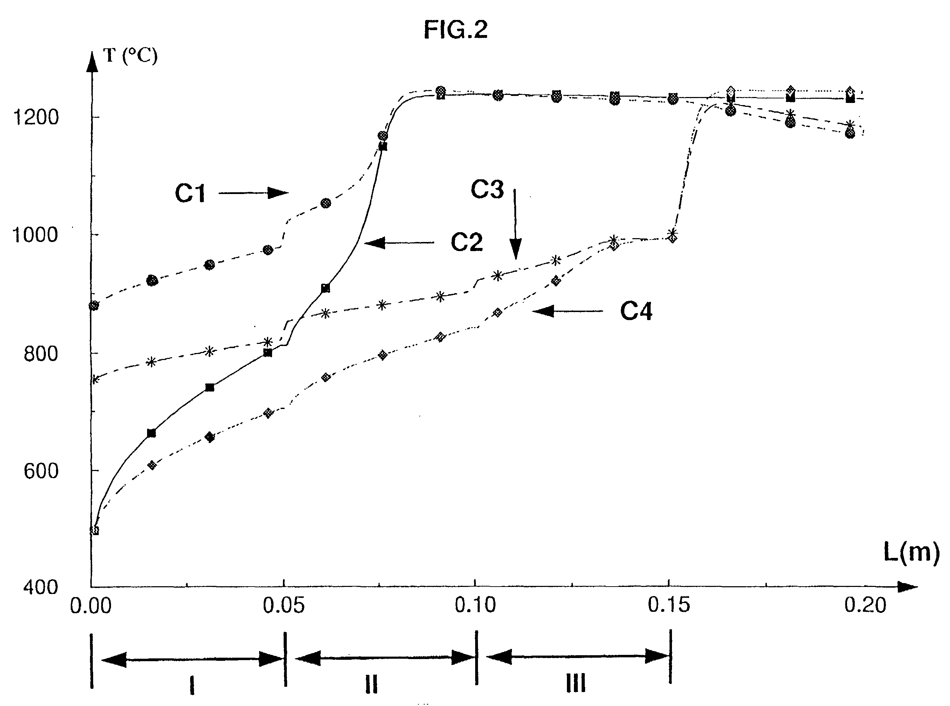

Sont représentées sur la figure 2, les courbes C1 et C2 de variation de la température des gaz et du substrat dans la zone catalytique et en aval de celle-ci.

### EXEMPLE 4 (comparatif):

Par rapport aux exemples 1 et 2, la disposition de la chambre de combustion est différente. Elle est toujours composée de trois tranches de monolithe identiques, mais seulement une partie du combustible est mélangée à l'air avant la zone catalytique et la quantité de combustible est limitée de façon à maintenir la température du catalyseur inférieure à 1000°C. Le complément de combustible, qui est injecté dans les gaz chauds de la dernière tranche de monolithe catalytique immédiatement en aval de celle-ci, permet d'obtenir l'auto-inflammation du mélange.

Les performances du procédé sont évaluées dans les mêmes conditions opératoires que celles décrites le procédé de l'exemple 3 pour la même richesse en combustible soit 0,3. Le débit de gaz naturel injecté avant la première tranche du monolithe est de 58 kg/h, les 29 kg/h restants sont injectés dans les gaz chauds de la dernière tranche de monolithe catalytique immédiatement en aval de celui-ci.

Sont représentées sur la figure 2, les courbes C3 et C4 de variation de la température des gaz et du substrat dans la zone catalytique et en aval de celle-ci.

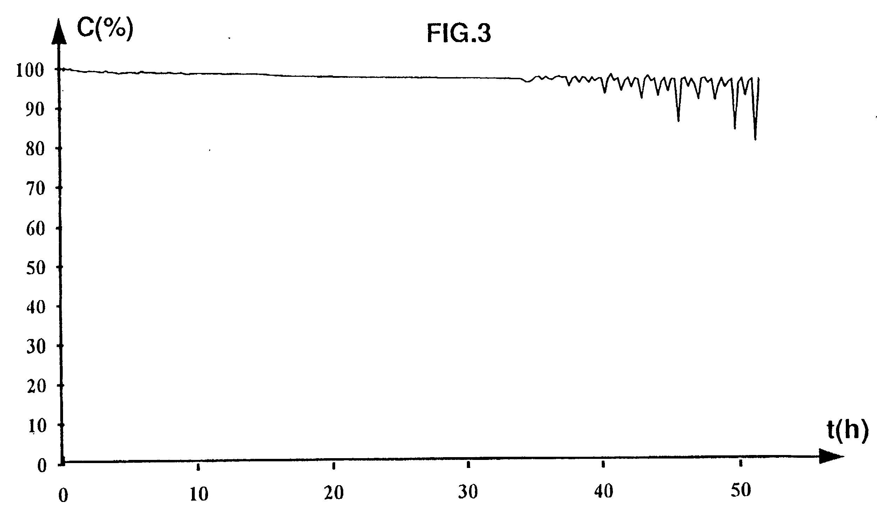

Vis-à-vis du procédé décrit dans l'exemple 3 avec une seule injection de combustible en amont de la zone catalytique, l'amélioration constatée concerne la température du substrat qui ne dépasse pas 1000°C (courbe C3 de la figure 2). La vitesse de désactivation est donc fortement ralentie. Toutefois, la troisième tranche catalytique se situe dans un domaine de température où l'équilibre PdO ⇔ Pd + 1/2 O₂ est déplacé vers la droite. Il s'ensuit que la conversion se met à osciller au bout de quelques dizaines d'heures vomme cela apparaît sur la figure 3. Un tel comportement oscillant peut être interprété de la façon suivante : lorsque la conversion augmente, la température du catalyseur dépasse 900°C, l'oxyde de palladium se transforme alors en palladium métallique moins actif, la conversion chute et le palladium métallique se réoxyde. La conversion augmente alors à nouveau. Un tel comportement oscillant est en accord avec les observations rapportées dans l'art antérieur et plus particulièrement dans l'article de Furuya et al., "A Study on Combustion Catalyst for Gaz Turbine", Second Tokyo Conference On Advanced Catalytic Science and Technology (TOCAT), Tokyo, 21-26 août 1994, I.38, page 129-130.

### EXEMPLE 5 (selon l'invention) :

Dans cet exemple, les conditions opératoires sont identiques à celle de l'exemple précédent.

Dans une première étape, on enduit trois tranches de monolithe comme décrits ci-dessus par une enduction telle que décrite dans l'exemple 1 de la demande de brevet français FR-A- 2 726 774.

Dans une seconde étape dite d'imprégnation, les tranches de monolithe enduite sont immergées dans une solution de nitrate de palladium de telle manière que la quantité de palladium fixée après séchage et calcination à 500°C pendant deux heures soit de 5% en poids de palladium par rapport au support poreux, soit encore exprimé par rapport au catalyseur : 6 g de palladium par litre de catalyseur.

Le catalyseur ainsi préparé contient en poids rapporté au support poreux 4,13% de cérium, 1,31% de fer et 5% de palladium. Lorsque le procédé à injection étagée comprend dans sa zone catalytique un tel catalyseur, le procédé fonctionne cinquante heures sans qu'on n'observe ni la désactivation du catalyseur ni le comportement oscillant décrit dans l'art antérieur. En outre, la température d'amorçage de la combustion ne varie pas au cours de tests successifs.

## Revendications

1. Procédé de combustion catalytique à injection étagée de combustible comprenant : une première injection de combustible et d'air, le passage du mélange air-combustible formé dans une zone catalytique et une seconde injection de combustible dans le flux de sortie de ladite zone catalytique ; ledit procédé étant **caractérisé en ce que** ladite zone catalytique comprend au moins un catalyseur comprenant un substrat monolithique, un support poreux à base d'oxyde inorganique réfractaire et une phase active comprenant du cérium, du fer, et éventuellement du zirconium, ainsi qu'au moins un métal choisi dans le groupe formé par le palladium et le platine; la teneur en support poreux est comprise entre 100 et 400 g par litre de catalyseur; la teneur en cérium est comprise entre 0,3 et 20% en poids par rapport au support poreux; la teneur en zirconium est comprise entre 0 et 20% en poids par rapport au support poreux; la teneur en fer étant comprise entre 0,01 et 3,5% de fer en poids par rapport au support poreux; et la teneur en palladium et/ou platine est supérieure à 3 g par litre de catalyseur.

2. Procédé selon la revendication 1, **caractérisé en ce que** la teneur en support poreux est comprise entre 200 et 350 g par litre de catalyseur, la teneur en cérium est comprise entre 2 et 15% en poids par rapport au support poreux, la teneur en zirconium est comprise entre 2 et 15% en poids par rapport au support poreux; la teneur en fer est comprise entre 0,1 et 2% de fer en poids par rapport au support et la teneur en palladium et/ou platine est comprise entre 5 et 15 g par litre de catalyseur.

3. Procédé selon l'une des revendications 1 et 2, **caractérisé en ce que** que le débit de combustible injecté dans dans l'air en amont de la zone catalytique est tel que la température du catalyseur de la zone catalytique soit inférieure à environ 1000°C, et que la température des gaz en sortie de ladite zone soit inférieure à 1000°C.

4. Procédé selon l'un des revendications 1 à 3, **caractérisé en ce que**, dans ledit catalyseur, ledit support poreux à base d'oxyde inorganique réfractaire est choisi dans le groupe formé par l'alumine alpha, l'alumine delta, l'alumine éta, l'alumine gamma, l'alumine kappa, l'alumine khi, l'alumine rhô, l'alumine théta, la silice, les silices-alumines, l'oxyde de titane, la zircone et leurs mélanges.

5. Procédé selon l'une des revendications 1 à 4 **caractérisé en ce que**, dans ledit catalyseur, ledit support poreux présente une surface spécifique comprise entre 20 et 250 m²/g.

6. Procédé selon l'une des revendications 1 à 5, **caractérisé en ce que**, dans ledit catalyseur, le support poreux à base d'oxyde inorganique réfractaire est choisi dans le groupe formé par l'alumine alpha, l'alumine delta, l'alumine éta, l'alumine gamma, l'alumine kappa, l'alumine khi, l'alumine rhô et l'alumine théta.

7. Procédé selon la revendication 6, **caractérisé en ce que**, dans ledit catalyseur, ledit support a été stabilisé thermiquement par introduction d'au moins un composé choisi dans le groupe formé par les oxydes de terres rares trivalentes, les oxydes de métaux alcalino-terreux et la silice.

8. Procédé selon la revendication 7, **caractérisé en ce que**, dans ledit catalyseur, ledit support a été stabilisé thermiquement par de la silice à une teneur de 1 à 5% en poids par rapport au support poreux.

9. Procédé selon l'une des revendications 1 à 8, **caractérisé en ce que** ledit substrat est métallique ou céramique.

10. Procédé selon l'une des revendications 1 à 9, **caractérisé en ce que** ladite zone catalytique comprend plusieurs monolithes successifs.

11. Procédé selon l'une des revendications 1 à 10, **caractérisé en ce qu'**il comprend en outre un élément monolithique à structure cellulaire, céramique ou métallique, en aval de la zone catalytique et **en ce que** la seconde injection de combustible est effectuée entre la zone catalytique et ledit élément monolithique.

12. Procédé selon la revendication 11, **caractérisé en que** ledit élément monolithique supplémentaire est recouvert d'un catalyseur.

13. Procédé selon la revendication 12, **caractérisé en que** ledit catalyseur recouvrant l'élément monolithique est choisi parmi les oxydes de type hexaaluminates.

14. Procédé selon la revendication 13, **caractérisé en que** le ledit catalyseur comprend un composé de formule A₍₁₋ₓ₎B_{y}C_{z}Al_{(12-y-z)}O_{(19-δ)}, dans laquelle A représente au moins un élément de valence X sélectionné dans le groupe formé par le baryum, le strontium et les terres rares; B représente au moins un élément de valence Y sélectionné dans le groupe formé par Mn, Co et Fe; C représente au moins un élément sélectionné dans le groupe formé par Mg et Zn; x ayant une valeur de 0 à 0,25, y ayant une valeur de 0,5 à 3 et z ayant une valeur de 0,01 à 3; la somme y + z a une valeur maximale de 4 et à a une valeur qui, déterminée en fonction des valences X et Y respectives des éléments A et B et des valeurs de x, y et z, est égale à 1-1/2 {(1-x)X + yY-3 y - z}.

## Patentansprüche

1. Verfahren zur katalytischen Verbrennung mit gestufter Injektion von Brennstoff, umfassend: eine erste Injektion von Brennstoff und Luft, den Durchgang des Luftbrennstoffgemisches, der in einer katalytischen Zone gebildet ist und eine zweite Injektion von Brennstoff in den Austrittsstrom dieser katalytischen Zone, wobei das Verfahren **dadurch gekennzeichnet ist, dass** diese katalytische Zone wenigstens einen Katalysator mit einem monolithischen Substrat, einem porösen Träger auf der Basis anorganischen feuerfesten Oxids und eine aktive Phase umfasst, die Cer, Eisen und gegebenenfalls Zirkonium sowie wenigstens ein Metall aufweist, das aus der durch Palladium und Platin gebildeten Gruppe gewählt ist; wobei der Gehalt an porösem Träger zwischen 100 und 400 g pro Liter Katalysator, der Gehalt an Cer zwischen 0,3 und 20 Gew.-% bezogen auf den porösen Träger umfasst und der Gehalt an Zirkonium zwischen 0 und 20 Gew.-% bezogen auf den porösen Träger liegt; der Gehalt an Eisen zwischen 0,01 und 3,5 Gew.-% Eisen bezogen auf den porösen Träger und der Gehalt an Palladium und/oder Platin oberhalb 3 g pro Liter Katalysator liegt.

2. Verfahren nach Anspruch 1, **dadurch gekennzeichnet, dass** der Gehalt an porösem Träger zwischen 200 und 350 g pro Liter Katalysator, der Gehalt an Cer zwischen 2 und 15 Gew.-% bezogen auf den porösen Träger, der Gehalt an Zirkonium zwischen 2 und 15 Gew.-% bezogen auf den porösen Träger, der Gehalt an Eisen zwischen 0,1 und 2 Gew.-% Eisen bezogen auf den Träger und der Gehalt an Palladium und/oder Platin zwischen 5 und 15 g pro Liter Katalysator beträgt.

3. Verfahren nach einem der Ansprüche 1 oder 2, **dadurch gekennzeichnet, dass** die in die Luft vor der katalytischen Zone injizierte Brennstoffmenge derart ist, dass die Temperatur des Katalysators der katalytischen Zone unter etwa 1000 °C und die Temperatur der Austrittsgase aus dieser Zone unterhalb 1000 °C liegt.

4. Verfahren nach einem der Ansprüche 1 bis 3, **dadurch gekennzeichnet, dass** in diesem Katalysator der poröse Träger auf der Basis feuerfesten anorganischen Oxids gewählt ist aus der durch Alpha-Aluminiumoxid, Delta- Aluminiumoxid, Eta- Aluminiumoxid, Gamma-Aluminiumoxid, Kappa-Aluminiumoxid, Chi-Aluminiumoxid, Rho-Aluminiumoxid, Theta-Aluminiumoxid, Siliziumoxid; Siliziumoxide-Aluminiumoxide, Titanoxid, Zirkonoxid und deren Gemische gebildeten Gruppe.

5. Verfahren nach einem der Ansprüche 1 bis 4, **dadurch gekennzeichnet, dass** in diesem Katalysator der poröse Träger eine spezifische Oberfläche zwischen 20 und 250 m²/g aufweist.

6. Verfahren nach einem der Ansprüche 1 bis 5, **dadurch gekennzeichnet, dass** in diesem Katalysator der poröse Träger auf der Basis feuerfesten anorganischen Oxids gewählt ist aus der durch Alpha-Aluminiumoxid, Delta-Aluminiumoxid, Eta- Aluminiumoxid, Gamma-Aluminiumoxid, Kappa-Aluminiumoxid, Chi-Aluminiumoxid, Rho-Aluminiumoxid und Theta-Aluminiumoxid gebildeten Gruppe.

7. Verfahren nach Anspruch 6, **dadurch gekennzeichnet, dass** in diesem Katalysator dieser Träger thermisch dadurch stabilisiert wurde, dass wenigstens eine Verbindung eingeführt wurde, die aus der durch die trivalenten Oxide seltener Erden, die Erdalkali-Metalloxide und das Aluminiumoxid gebildeten Gruppe gewählt ist.

8. Verfahren nach Anspruch 7, **dadurch gekennzeichnet, dass** in diesem Katalysator der Träger thermisch stabilisiert wurde durch Siliziumoxid mit einem Gehalt von 1 bis 5 Gew.-% bezogen auf den porösen Träger.

9. Verfahren nach einem der Ansprüche 1 bis 8, **dadurch gekennzeichnet, dass** dieses Substrat metallisch oder keramisch ist.

10. Verfahren nach einem der Ansprüche 1 bis 9, **dadurch gekennzeichnet, dass** diese katalytische Zone mehrere aufeinanderfolgende Monolithe umfasst.

11. Verfahren nach einem der Ansprüche 1 bis 10, **dadurch gekennzeichnet, dass** es im übrigen ein monolithisches Element mit zellförmiger keramischer oder metallischer Struktur hinter der katalytischen Zone umfasst und dass die zweite Brennstoffinjektion durchgeführt wird zwischen der katalytischen Zone und diesem monolithischem Element.

12. Verfahren nach Anspruch 11, **dadurch gekennzeichnet, dass** dieses zusätzliche monolithische Element von einem Katalysator überdeckt oder überzogen ist.

13. Verfahren nach Anspruch 12, **dadurch gekennzeichnet, dass** dieser das monolithische Element überziehende Katalysator gewählt ist aus den Oxiden vom Typ Hexaaluminate.

14. Verfahren nach Anspruch 13, **dadurch gekennzeichnet, dass** dieser Katalysator eine Verbindung der Formel A(1-x)ByCzA1(12-y-z)O(19-δ) umfaßt, in der A wenigstens ein Element mit der Valenz X, gewählt aus der durch Barium, Strontium und die seltenen Erden gebildeten Gruppe; B wenigstens ein Element mit der Valenz Y darstellt, gewählt aus der durch Mn, Co und Fe gebildeten Gruppe und C wenigstens ein Element darstellt, das aus der durch Mg und Zn gebildeten Gruppe gewählt ist; x einen Wert zwischen 0 und 0,25 hat und y einen Wert von 0,5 bis 3 hat und z einen Wert zwischen 0,01 und 3 hat, wobei die Summe y + z einen Maximalwert von 4 hat und δ von einem Wert ist, der, bestimmt als Funktion der jeweiligen Valenzen X und Y der Elemente A und B und der Wert von x, y und z gleich 1-1/2 {(1-x)X + yY - 3y - z} ist.

## Claims

1. Process for catalytic combustion with staged fuel injection that comprises:
a first injection of fuel and air, the passage of the air-fuel mixture that is formed in a catalytic zone, and a second injection of fuel into the output flow from said catalytic zone; with said process being **characterized in that** said catalytic zone comprises at least one catalyst that comprises a monolithic substrate, a porous support with a refractory inorganic oxide base, and an active phase that comprises cerium, iron, and
optionally zirconium, as well as at least one metal that is selected from the group that is formed by palladium and platinum; the content of porous support is between 100 and 400 g per liter of catalyst; the cerium content is between 0.3 and 20% by weight relative to the porous support; the zirconium content is between 0 and 20% by weight relative to the porous support; with the iron content being between 0.01 and 3.5% by weight of iron relative to the porous support; and the palladium and/or platinum content is greater than 3 g per liter of catalyst.

2. Process according to claim 1, wherein the content of porous support is between 200 and 350 g per liter of catalyst; the cerium content is between 2 and 15% by weight relative to the porous support; the zirconium content is between 2 and 15% by weight relative to the porous support; the iron content is between 0.1 to 2% by weight of iron relative to the support; and the palladium and/or platinum content is between 5 and 15 g per liter of catalyst.

3. Process according to one of claims 1 and 2, wherein the flow of injected fuel into the air upstream from the catalytic zone is such that the temperature of the catalyst of the catalytic zone is less than about 1000°C and wherein the temperature of gases at the outlet of said zone is less than 1000°C.

4. Catalyst according to one of claims 1 to 3, wherein, in said catalyst, said porous support a refractory inorganic oxide base is selected from the group that is formed by alumina-alpha, alumina-delta, alumina-eta, alumina-gamma, alumina-kappa, alumina-khi, alumina-rho, alumina-theta, silica, silica-aluminas, titanium oxide, zirconia and mixtures thereof.

5. Process according to one of claims 1 to 4, wherein in said catalyst said porous support has a specific surface area of between 20 and 250 m²/g.

6. Process according to one of claims 1 to 5, wherein, in said catalyst, the porous support with a refractory inorganic oxide base is selected from the group that is formed by the alumina-alpha, alumina-delta, alumina-eta, alumina-gamma, alumina-kappa, alumina-khi, alumina-rho, and alumina-theta.

7. Catalyst according to claim 6, wherein, in said catalyst, said support has been thermally stabilized by introducing at least one compound that is seleced from the group that is formed by oxides of trivalent rare earths, oxides of alkaline-earth metals, and silica.

8. Process according to claim 7, wherein, in said catalyst, said support has been thermally stabilized by silica at a content of 1 to 5% by weight relative to the porous support.

9. Process according to one of claims 1 to 8, wherein said substrate is metal or ceramic.

10. Process according to one of claims 1 to 9, wherein said catalytic zone comprises several successive monoliths.

11. Process according to one of claims 1 to 10, wherein it also comprises a monolithic element with a ceramic or metallic cellular structure, downstream from the catalytic zone, and wherein the second fuel injection is carried out between the catalytic zone and said monolithic element.

12. Process according to claim 11, wherein said additional monolithic element is covered with a catalyst.

13. Process according to claim 12, wherein said catalyst that covers the monolithic element is selected from among the oxides of the hexaaluminate type.

14. Process according to claim 13, wherein said catalyst comprises a compound of formula A₍₁₋ₓ₎B_{y}C_{z}Al_{(12-y-z)}O_{(19-δ)}, in which A represents at least one element of valence X that is selected from the group that is formed by barium, strontium, and rare earths; B represents at least one element of valence Y that is selected from the group formed by Mn, Co, and Fe; C represents at least one element that is selected from the group formed by Mg and Zn; with x having a value of 0 to 0.25, with y having a value of 0.5 to 3 and with z having a value of 0.01 to 3; the sum of y + z has a maximum value of 4 and δ has a value which, determined depending on respective valences X and Y of elements A and B and values of x, y and z, is equal to 1-1/2 {(1-x)X + yY-3 y - z}.
